# EUROPEAN PATENT SPECIFICATION

(11) **EP 0 390 294 B1**
(45) Date of publication and mention of the grant of the patent: **07.06.1995**
(21) Application number: 90200762.4
(22) Date of filing: 28.03.1990
(51) Int. Cl.: C08K 3/22, C08K 5/09, C08K 9/02, C08K 9/04, C08L 73/00

(54) **Flame retardant composition**
Flammenhemmende Zusammensetzung
Composition retardatrice de flamme

(30) Priority: 02.05.1989 GB 8910011; 31.03.1989 US 332250
(43) Date of publication of application: 03.10.1990
(73) Proprietor: SHELL INTERNATIONALE RESEARCH MAATSCHAPPIJ B.V., 2596 HR Den Haag (NL)
(72) Inventor: Syrier, Johannes Leopold Marie, NL-1031 CM Amsterdam (NL); Danforth, Richard Louis, Missouri City, Texas 77459 (US); Smith, Darlene Gayle, Bellville, Texas 77418 (US)

(56) References cited:
- EP-A- 0 052 868
- GB-A- 1 406 872
- US-A- 4 761 449

## Description

The present invention relates to flame-retardant polymer compositions, and more in particular to such flame-retardant compositions based on copolymers of carbon monoxide and at least one ethylenically unsaturated compound.

The general class of polymers of carbon monoxide and one or more ethylenically unsaturated compounds has been known for some years. According to U.S.-A-2,495,286, such polymers of relatively low carbon monoxide content are produced in the presence of free radical catalysts such as benzoyl peroxide. British-A-1,081,304 discloses such polymers of higher carbon monoxide content produced in the presence of alkylphosphine complexes of palladium as catalyst.

More recently, the class of linear alternating polymers of carbon monoxide and olefinically unsaturated compounds, now known as polyketones, has become of greater interest, in part because of improved methods of production. Such methods are shown, for example, by EP-A-181 014 and 121 965. The disclosed processes employ, inter alia, a compound of a Group VIII metal such as palladium, an anion of a non-hydrohalogenic acid having a pKa below 2 and a bidentate ligand of phosphorus. The resulting polymers are generally high molecular weight thermoplastic polymers having utility in the production of articles such as containers for food and drink and parts for the automotive industry or structural members for use in the construction industry.

With regard to any plastic material employed in a public application, some concern must be shown for the consequences of the material catching fire and burning. It is known that some polymers will burn more easily than others. Polymers such as e.g. polyvinylchloride produce, upon combustion, gaseous compounds which have a flame-retarding effect. However in view of the toxic and/or corrosive nature of some of these gaseous compounds, the applicability of such polymers, or the products based thereon, may be restricted. With other polymers, e.g. those which do not form flame-retardant gaseous compounds upon combustion, flame retardation may be obtained by incorporation of compounds, which can provide flame retardation, e.g. by the formation of flame-retarding gaseous compounds, such as carbon dioxide and water, upon decomposition of said compounds.

In contrast to many other polymers, the hereinbefore mentioned linear alternating copolymers of carbon monoxide and at least one ethylenically unsaturated compound will generally be characterised by a very high melting point, the actual value of said melting point being closely related to the nature of said unsaturated compound or compounds. Said high melting points may introduce a problem in the preparation of flame-retarding compositions based on said polymers, as this preparation will generally require processing temperatures which are considerably higher than said melting points. It is conceivable that some of the flame-retardant compounds will decompose prematurely under conditions of high shear and high temperatures as will be required for said preparation, and would thus not only be less effective as a flame-retardant, but simultaneously result in serious problems during processing. It has been proposed, according to U.S.-A-4,761,449, to include an alkaline earth metal (bi)carbonate such as calcium carbonate in the said copolymers. While these compositions show improved flame retardation, they are still open to improvement. In particular, the compositions containing up to 25% by weight of calcium carbonate still have Limiting Oxygen Index (LOI) values of only 27-27.5. LOI values of 30 or greater are preferred for many commercial applications. In addition, the mechanical properties of the polyketone polymers should be retained as much as possible, so that the amount of flame retardant necessary to obtain commercial compositions is as low as possible. Hence, it can be appreciated that there is need to develop flame-retardant compositions based on the carbon monoxide copolymers mentioned hereinbefore, and which do not suffer from the problems mentioned hereinbefore.

As a result of continuing and extensive research and experimentation it has now been found that it is possible to formulate flame-retardant compositions based on said carbon monoxide copolymer and selected compounds which do not or hardly decompose during the incorporation thereof into the copolymers, and which compounds are able to initiate an enhanced generation of gaseous flame-retarding compounds from said polymer compositions on combustion.

The invention provides therefore flame-retardant polymer compositions comprising a linear alternating copolymer of carbon monoxide and at least one ethylenically unsaturated compound and a flame-retardant quantity of a substance which is able to generate, upon decomposition, a flame-retarding gaseous compound, characterised in that said substance is a basic or potentially basic reacting metal compound selected from the group of compounds consisting of oxalates and hydroxides, and has an initial decomposition temperature which is at least 25 °C higher than the crystalline melting point of said polymer.

The polymers from which the compositions of the invention are produced are linear alternating polymers of carbon monoxide and at least one ethylenically unsaturated compound. Suitable ethylenically unsaturated compounds have up to 20 carbon atoms inclusive, preferably up to 10 carbon atoms inclusive and include wholly aliphatic hydrocarbons such as ethylene and other α-olefins including propylene, butene-1, octene-1 and dodecene-1; arylaliphatic compounds containing an aryl substituent on an otherwise aliphatic molecule, particularly an aryl substituent on a carbon atom of the ethylenic unsaturation, such as styrene, p-methylstyrene, m-methylstyrene and p-ethylstyrene; as well as unsaturated compounds containing hetero atoms such as O, N, P and halogen, and exemplified by compounds such as methyl acrylate, methyl methacrylate, vinyl acetate, undecenoic acid, 6-chlorohexene, N-vinylpyrrolidone and the diethylester of vinyl-phosphonic acid. Preferred polymers are copolymers of carbon monoxide and ethylene or terpolymers of carbon monoxide, ethylene and a second aliphatic α-olefin of 3 or more carbon atoms, particularly propylene.

The physical properties of the polymer will be determined in part by the molecular weight and by whether the polymer is a copolymer or a terpolymer. Typical melting points are from 175 °C to 300 °C, more typically from about 210 °C to 280 °C.

Preferred terpolymers in the flame-retardant composition of the present invention are terpolymers of carbon monoxide, ethylene and propylene wherein the ethylene to propylene molar ratio in the polymer is at least 3:1.

The term "basic-reacting" as used herein refers to a compound, which in its free state can react with acids to form salts, or that said compound itself is a salt of a strong base and a weak acid and can be hydrolysed by water. The term "potentially basic-reacting compound" refers to compounds, which, upon e.g. decomposition, can form a basic-reacting compound.

In the context of the present invention the term "flame-retarding quantity" refers to a quantity of a compound as mentioned hereinbefore which is able to generate a sufficient amount of said gaseous compound to have some flame-retarding effect. As some compounds will generate said gaseous compounds more easily than others, said flame-retardant quantity may vary strongly with the nature of the compound. Whatever the nature of said compound may be the quantity wherein it will be used in the present invention will generally comprise a minor part of the ultimate composition. The flame-retardant compounds will preferably comprise from 2 to 40% m of the total composition, and more preferably from 5-25% m. In the present application the term "%m" refers to a mass percentage.

The term "initial decomposition temperature" is the temperature at which a compound will begin to decompose as determined by means of thermogravimetric analysis, employing a heating rate of 1 °C per min., as described in Thermochim.Acta (1981), pp. 207-218.

The metal compounds, which may be used in the flame retardant compositions of the present invention, belong to a much larger group of compounds, hereinafter referred to as flame-retardant compounds, which upon decomposition, e.g. during conditions which occur during combustion, are able to generate gaseous compounds having flame-retardant properties. Such compounds may be beneficially used in flame-retardant polymeric compositions.

It was surprisingly found, when the carbon monoxide copolymers, as described hereinbefore, are combined with the basic or potentially basic reacting species of said group of flame-retardant compounds, that surprisingly effective flame-retardant compositions may be obtained. Without wishing to be bound by any theory it is believed that in the presence of a basic compound a reaction may be induced in the polymer which amongst others results in the generation of water, and could well be related to what has been described in U.S.-A-3,979,373 and British Patent Specification 613,180. This phenomenon would not occur with e.g. hydrocarbon polymers. The conditions favouring this reaction are generally those to which such a polymer, or a product based thereon, will not be submitted under normal use.

In this context it is believed that in view of their potentially basic nature a large number of metal oxides could also be used as flame-retardant compound in combination with the carbon monoxide copolymers mentioned hereinbefore. However it is felt that such compounds would be less effective, compared to the corresponding oxalates and hydroxides, as they do not decompose to generate flame-retarding gaseous compounds, and moreover would require the presence of water to become active basic compounds.

Preferred flame-retardant metal compounds are such metal compounds based on a metal of group I, IIA and IIB of the periodic system. Preferred such compounds include calcium oxalate, magnesium hydroxide and calcium hydroxide. Especially preferred are such group IIA metal-based compounds, in other words the oxalates and hydroxides of alkaline earth metals in particular the hydroxides thereof. Magnesium is in particular preferred.

The flame-retardant compounds which may be used in the compositions of the present invention are generally available in the form of fine powders, wherein the average particle may be in the range of from 0.05 » to 100 » although smaller or larger average particle sizes are not excluded.

The flame-retardant compounds may be used as such, although the use of mixtures of two or more of the hereinbefore mentioned flame-retardant compounds as well as mixtures of one or more of the hereinbefore mentioned flame-retardant compounds and other flame-retardant compounds is also considered to form a part of the present invention.

With some of the flame retardant compounds as mentioned hereinbefore, i.e. especially the strongly basic-reacting flame retardant compounds such as the metal hydroxides, it was experienced that the compositions containing them sometimes demonstrated an unacceptable degree of discoloration, especially when said compounds were present in a relatively large concentration. It was found that this discoloration could be considerably reduced if not overcome, by employing such compounds of which the particles had been provided with a pretreatment, i.e. a treatment of the particles before being dispersed in the polymer. Examples of such pretreatments include contacting said particles in an aqueous medium with one or more compounds such as selected from the group consisting of inorganic acids, silanes, silicon oils, fatty acids and fatty acid salts. Boric acid is a preferred inorganic treating agent, stearic acid is a preferred fatty acid, and sodium stearate and sodium oleate are preferred such fatty acid salts. Fatty acids are generally known, and usually are defined as comprising the aliphatic monocarboxylic acids having the formula CₙH₂ₙ₊₁COOH wherein n is 6 to 24. A relatively low level, e.g. 0.01 to 5 percent by weight of flame retardant is useful. Such methods are known for pretreating e.g. metal hydroxide or metal oxide hydrate flame retardant particles, in order to improve their dispersibility in certain polymeric materials, but it has now been found that the flame retarding power improves too by these methods. Hence, when the flame retardant compositions of the present invention are based on strongly basic-reacting flame-retardant compounds, it is preferred to employ such compounds in the form of such pretreated particles. Preferred pretreated flame retardant particles are stearic or boric acid treated particles. Very suitable is the stearic acid modified magnesium hydroxide sold under the trade mark Zerogen 35. It has a temperature stability, i.e. a decomposition temperature, in excess of 330 °C.

The flame retardant compositions may be produced by mixing the flame-retardant compound throughout the polyketone polymer. The method of forming the composition is not critical provided the method results in a uniform mixture of said flame-retardant compound throughout at least the outer layer of the polyketone polymer. In a preparation of a composition useful in the form in which it is produced, only the outermost portion of the composition needs to be provided with such flame-retardant compound. However, in most applications, a flame retardant composition is produced which is then processed further and in such applications the production of a substantially uniform mixture of polyketone polymer and flame-retardant compound is preferred. In one modification, the compositions are produced by dry blending the components in particulate form and subsequently converted to a substantially uniform composition by application of heat and pressure. Alternatively, the compositions are produced by heating the polyketone polymer until molten and the flame-retardant compound is mixed throughout the polymer by use of a high-shear mixer or extruder.

The polymer composition, in addition to polymer and flameretardant compound, may incorporate other conventional additives which do not detract from the flame retardant character of the composition. Examples of such additives are plasticizers, mould release agents and antioxidants, which are added by blending or other conventional methods together with or separately from the flame retardant compounds. In an alternative embodiment an alkaline earth metal carbonate is also incorporated in the composition to replace a portion of the hydroxide or oxalate. On of the considerations in adding the carbonate is cost. Calcium carbonate is preferred. Compositions comprise preferably 60-85% polyketone polymer, 5-30% hydroxide or oxalate, and 5-20% alkaline earth metal carbonate, especially 60-85% polyketone polymer, 20-30% hydroxide or oxalate, and 5-10% alkaline earth metal carbonate, with the proviso that the relative amount of hydroxide/oxalate to carbonate should be at least 1, preferably at least 2. These percentages are by weight of total composition, and should add up to 100%.

The flame retardant compositions may be processed by injection moulding, pressure forming or other conventional methods. They are characterised by properties of flexibility and strength in addition to flame retardation and are useful in a variety of applications, particularly where exposure to elevated temperature is likely to be encountered.

The invention will be further illustrated by the following examples. In all experiments, flame-retarding was determined by measuring the Limiting Oxygen Index according to ASTM D2863-77. This test measures the minimum concentration of oxygen in an oxygen-nitrogen atmosphere that is necessary to initiate and support a flame for 180 seconds on a test strip.

### Example I

### Preparation of magnesium hydroxide

Magnesium hydroxide was prepared by contacting a magnesium chloride brine ([MgCl₂]=1.8M) and sodium hydroxide ([NaOH]=2.5M) at 40 °C and pH 9.5 under continuous stirring in a 50 litre continuous precipitation unit. The average retention time was 60 minutes. The precipitated magnesium hydroxide was washed with deionised water until all soluble salts were removed, thereafter the washed precipitate was further de-watered by vacuum-filtration and subsequently spray-dried at 140 °C.

### Example II

### Preparation of boric acid treated magnesium hydroxide

200 g of magnesium hydroxide was dispersed in 1000 ml deionised water, and the temperature of the dispersion was raised to 40 °C. Subsequently 450 ml of an aqueous boric acid solution (60 g/litre water) was added over a period of 10 min. under continuous stirring, which resulted in a decrease in pH from initially 10.5 to 8.5. The precipitated magnesium hydroxide was filtered off on a Buchner funnel and dried at 140 °C. Chemical analyses indicated that 0.65% m B was present in the end product.

### Example III

### Preparation of zinc stearate-silicon oil treated magnesium hydroxide.

300 g of magnesium hydroxide was intensively mixed with 300 ml deionised water. Subsequently 21 ml of an aqueous dispersion comprising 195 g zinc stearate, 225 g of a 35% m silicon oil emulsion and 20 g nonylphenol ethoxylate per litre, was added to the aqueous magnesium hydroxide. The resulting paste was dried at 140 °C.

### Examples IV-VII

Flame retardant compositions were prepared by dry blending powdered copolymer (a CO-ethene-propene terpolymer having an LVN of 1.90 dl/g and a melting point of 219 °C) and a number of flame-retardant compounds of the type and in a ratio as indicated in Table 1 hereinafter, and subsequently compression moulded at 250 °C for 3 minutes to obtain 3 mm thick sheets of flame-retardant compositions. Samples for determining the flame-retardation, were cut from said sheets, and the flame-retarding properties were determined by measuring the Limiting Oxygen Index. The data obtained are presented in Table I.

### Examples VIII and IX

The procedure of Example VII was repeated with the exception that magnesium hydroxide (Mg(OH)₂) was replaced with a boric acid treated Mg(OH)₂ and Mg(OH)₂ coated with a mixture of silicon oil and sodium stearate. The results of the flame-retardation measurements have also been presented in Table I.

**Table I**

| Example | Flame-retardant Compound | Content % m on composition | Colour Composition | L.O.I.* % v |
|---|---|---|---|---|
| Comp. | None | - | whitish | 19 |
| IV | Calcium hydroxide | 20 | black | - |
| V | Calcium hydroxide | 0.9 | pale-yellow | 25 |
| VI | Calcium oxalate | 20 | white | 29 |
| VII | Magnesium hydroxide | 20 | brown | 32 |
| VIII | Magnesium hydroxide treated with boric acid | 20 | pale-yellow | 30 |
| IX | Magnesium hydroxide treated with silicon oil sodium stearate. | 20 | yellow | 33 |

| | | | | |
|---|---|---|---|---|
| * Limiting Oxygen Index. | | | | |

### Example X

A linear alternating terpolymer of carbon monoxide, ethene and propene was prepared in the presence of a catalyst composition formed from palladium acetate, the anion of trifluoroacetic acid, and 1,3-bis(diphenylphosphino)propane. The product had a melting point of 218 °C and an LVN of 1.14 dl/g. Four fillers (talc, mica, surface treated mica and calcium carbonate) and two flame retardants (a commercial magnesium hydroxide and a surface treated magnesium hydroxide obtainable under the trade mark Zerogen 35) were dry blended with the terpolymer at amounts of 20 and 40%, based on the weight of the final blend, on a 15 mm twin-screw extruder. Some foaming occurred, due to the inability of the extruding equipment to devolatilize. The extrudates were then pelletized, dried at 50 °C for 16 hours, and compression moulded into test plaques of 12.5 x 1.25 x 0.32 cm. The Limiting Oxygen Index values were determined and the results are presented in Table II.

**Table II**

| Exp. | Filler/Flame retardant | Level (% m) | LOI (%v) |
|---|---|---|---|
| 1 | Talc | 20 | 22.5 |
| 2 | Talc | 40 | 26.5 |
| 3 | Mica | 20 | 24.5 |
| 4 | Mica | 40 | 23.5 |
| 5 | Surface treated mica | 20 | 21.5 |
| 6 | Surface treated mica | 40 | 29.5 |
| 7 | Calcium carbonate | 20 | 22.5 |
| 8 | Calcium carbonate | 40 | 29.5 |
| 9 | Magnesium hydroxide | 20 | 32.5 |
| 10 | Magnesium hydroxide | 40 | 41.0 |
| 11 | Modified magnesium hydroxide | 20 | 30.5 |
| 12 | Modified magnesium hydroxide | 40 | 39.5 |
| 13 | None | 0 | 18.5 |

Only the compositions of experiments 9-12, containing magnesium hydroxide, are according to the invention, and as seen in Table II, they yield the best results.

### Example XI

A blend of two specific, linear alternating terpolymers of carbon monoxide, ethene and 7% m propene (the one having a melting point of 220 °C and an LVN of 1.79 dl/g and being present in an amount of 33% by weight, the other having a melting point of 223 °C and an LVN of 1.62 dl/g, being present in an amount of 67% by weight) was formed by dry mixing pellets of the two polymers. The blended mixture was then further compounded with the aid of a single feed, gentle mixing screw, avoiding a temperature rise and consequent foaming when a selected flame retardant was added. Thus compositions comprising the terpolymer blend ("polyketone"), stearic acid modified magnesium hydroxide and/or calcium carbonate were prepared, in the proportions listed in Table III. The blends were pelletized, dried at 71 °C for 16 hours, and injection moulded into test specimens. Room temperature Notched Izod, Flexural Modulus, LOI and UL94 tests were run.

The UL94 test is a vertical burn test. A test specimen is hung in a test chamber vertically and a flame held in contact with it for 10 seconds, then removed. The time that it takes for the specimen to stop burning is recorded. This is repeated four times with fresh specimens. These times are totaled and if the total is less than 50 seconds then the sample is given a rating of V-O, greater than 50 but less than 250 seconds with no flaming drip is V-1, and greater than 50 but less than 250 seconds with a flaming drip is rated V-2. If the sample burns longer than 250 seconds it is considered a failure.

All test results are listed in Table III.

**Table III**

| Exp. | Polyketone (% m) | Mod.Mg(OH)₂ (% m) | CaCO₃ (% m) | Notched Izod (m.kg/m) | Flex. Mod. (MPa) | UL94 | LOI (%v) |
|---|---|---|---|---|---|---|---|
| 1 | 100 | 0 | 0 | 16.31 | 1790 | - | 17.5 |
| 2 | 80 | 10 | 10 | 8.05 | 2310 | V-1 | 29.5 |
| 3 | 70 | 20 | 10 | 8.75 | 2690 | V-0 | 30.5 |
| 4 | 60 | 30 | 10 | 6.36 | 2960 | V-0 | 34.5 |
| 5 | 75 | 20 | 5 | 8.48 | 2340 | V-0 | 30.5 |
| 6 | 80 | 20 | 0 | 9.51 | 2340 | V-0 | 30.5 |
| 7 | 70 | 30 | 0 | 9.95 | 2140 | V-0 | 31.5 |
| 8 | 60 | 40 | 0 | 9.02 | 2790 | V-0 | 35.5 |

Only the compositions of experiments 2-8 are according to the invention. It may be concluded from the table that for the polyketone polymers of high melting point, the choice of the flame retardant is crucial. The modified magnesium hydroxide gives good flame retardation, with only a moderate loss in mechanical properties. The substitution of part of the relatively costly modified magnesium hydroxide by the less costly calcium carbonate, may be quite acceptable for a number of less demanding uses.

### Example XII

Example XI was repeated using a composition of 40% m polypropylene homopolymer and 60% m modified magnesium hydroxide. Only at this high concentration a V-0 rating in the UL94 could be obtained. The Izod impact strength was 8.15 m.kg/m, and the flexural modulus was 2880 MPa, but other physical properties worsened considerably, e.g. the elongation at break dropped from over 300% for unfilled polypropylene to 12% for the filled variety. This shows that the high levels at which modified magnesium hydroxide is typically employed, are disadvantageous to the mechanical properties of polymers, but that such high levels are, surprisingly, unnecessary in linear alternating copolymers of carbon monoxide and one or more olefinically unsaturated compounds.

## Claims (Claims for the following Contracting State(s): AT, BE, CH, DE, DK, FR, GB, GR, IT, LI, LU, NL, SE)

1. Flame-retardant polymer compositions comprising a linear alternating copolymer of carbon monoxide and at least one ethylenically unsaturated compound, and at least a flame-retardant quantity of a substance which is able to generate, upon decomposition, a flame-retardant gaseous compound, characterised in that said substance is a metal compound selected from the group of compounds consisting of oxalates and hydroxides, which compound either is a basic reacting compound or forms a basic reacting compound upon decomposition, and has an initial decomposition temperature which is at least 25 °C higher than the crystalline melting temperature of said polymer.

2. Flame-retardant compositions as claimed in claim 1, wherein the metal compounds are based on a metal from group I, IIA, IIB of the periodic system.

3. Flame-retardant compositions as claimed in claim 2, wherein said metal is a metal from group IIA of the periodic system, especially magnesium.

4. Flame-retardant compositions as claimed in any one of claims 1-3, wherein the flame-retardant compounds comprise from 2-40% mass of the total composition.

5. Flame-retardant compositions as claimed in claim 4, wherein the flame-retardant compounds comprise from 5-25% mass of the total composition.

6. Flame-retardant compositions as claimed in any one of claims 1-5, wherein the particles of the flame-retardant compounds have been pretreated prior to being dispersed in the polymer.

7. Flame-retardant compositions as claimed in claim 6, wherein the pretreatment comprises contacting said particles in an aqueous medium with one or more compounds selected from the group consisting of inorganic acids, silanes, silicon oils, fatty acids and fatty acid salts.

8. Flame-retardant compositions as claimed in claim 7, wherein the fatty acid salt is sodium stearate or sodium oleate.

9. Flame-retardant compositions as claimed in claim 7, wherein the particles of the flame retardant compound are boric acid treated flame retardant particles.

10. Flame-retardant compositions as claimed in claim 7, wherein the particles of the flame retardant compound are stearic acid treated flame retardant particles.

## Claims (Claims for the following Contracting State(s): ES)

1. Process comprising combining a linear alternating copolymer of carbon monoxide and at least one ethylenically unsaturated compound, and at least a flame-retardant quantity of a substance which is able to generate, upon decomposition, a flame-retardant gaseous compound, characterised in that said substance is a metal compound selected from the group of compounds consisting of oxalates and hydroxides, which compound either is a basic reacting compound or forms a basic reacting compound upon decomposition, and has an initial decomposition temperature which is at least 25 °C higher than the crystalline melting temperature of said polymer.

2. Process as claimed in claim 1, wherein the metal compounds are based on a metal from group I, IIA, IIB of the periodic system.

3. Process as claimed in claim 2, wherein said metal is a metal from group IIA of the periodic system, especially magnesium.

4. Process as claimed in any one of claims 1-3, wherein the flame-retardant compounds comprise from 2-40% mass of the total composition.

5. Process as claimed in claim 4, wherein the flame-retardant compounds comprise from 5-25% mass of the total composition.

6. Process as claimed in any one of claims 1-5, wherein the particles of the flame-retardant compounds have been pretreated prior to being dispersed in the polymer.

7. Processs as claimed in claim 6, wherein the pretreatment comprises contacting said particles in an aqueous medium with one or more compounds selected from the group consisting of inorganic acids, silanes, silicon oils, fatty acids and fatty acid salts.

8. Process as claimed in claim 7, wherein the fatty acid salt is sodium stearate or sodium oleate.

9. Process as claimed in claim 7, wherein the particles of the flame retardant compound are boric acid treated flame retardant particles.

10. Process as claimed in claim 7, wherein the particles of the flame retardant compound are stearic acid treated flame retardant particles.

## Patentansprüche (Patentansprüche für folgende(n) Vertragsstaat(en): AT, BE, CH, DE, DK, FR, GB, GR, IT, LI, LU, NL, SE)

1. Flammhemmende Polymerzusammensetzungen, bestehend aus einem linearen, alternierenden Copolymeren aus Kohlenmonoxid und mindestens einer ethylenisch ungesättigten Verbindung und mindestens einer flammhemmenden Menge eines Stoffes, der in der Lage ist, bei Zerfall eine flammhemmende, gasförmige Verbindung zu erzeugen, dadurch gekennzeichnet, daß es sich bei dem Stoff um eine aus der Verbindungsgruppe der Oxalate und Hydroxide ausgewählte Metallverbindung handelt, die entweder eine basisch reagierende Verbindung ist oder bei Zerfall eine basisch reagierende Verbindung bildet und eine anfängliche Zersetzungstemperatur aufweist, die mindestens 25°C höher als die kristalline Schmelztemperatur des Polymers ist.

2. Flammhemmende Zusammensetzungen nach Anspruch 1, wobei die Metallverbindungen auf einem Metall der Gruppe I, IIA, IIB des Periodensystems basieren.

3. Flammhemmende Zusammensetzungen nach Anspruch 2, wobei es sich bei dem Metall um ein Metall der Gruppe IIA des Periodensystems, insbesondere um Magnesium, handelt.

4. Flammhemmende Zusammensetzungen nach einem der Ansprüche 1-3, wobei die flammhemmenden Verbindungen 2-40 Massenprozent der Gesamtzusammensetzung ausmachen.

5. Flammhemmende Zusammensetzungen nach Anspruch 4, wobei die flammhemmenden Verbindungen 5-25 Massenprozent der Gesamtzusammensetzung ausmachen.

6. Flammhemmende Zusammensetzungen nach einem der Ansprüche 1-5, wobei die Partikel der flammhemmenden Verbindungen vor ihrer Dispergierung im Polymer vorbehandelt wurden.

7. Flammhemmende Zusammensetzungen nach Anspruch 6, wobei die Vorbehandlung darin besteht, daß man die Partikel in einem wäßrigen Medium mit einer oder mehreren aus der Gruppe der anorganischen Säuren, Silane, Silikonöle, Fettsäuren und fettsauren Salzen ausgewählten Verbindungen in Kontakt bringt.

8. Flammhemmende Zusammensetzungen nach Anspruch 7, wobei es sich bei dem fettsauren Salz um Natriumstearat oder Natriumoleat handelt.

9. Flammhemmende Zusammensetzungen nach Anspruch 7, wobei es sich bei den Partikeln der flammhemmenden Verbindung um mit Borsäure behandelte flammhemmende Partikel handelt.

10. Flammhemmende Zusammensetzungen nach Anspruch 7, wobei es sich bei den Partikeln der flammhemmenden Verbindung um mit Stearinsäure behandelte flammhemmende Partikel handelt.

## Patentansprüche (Patentansprüche für folgende(n) Vertragsstaat(en): ES)

1. Verfahren, bei dem man ein lineares, alternierendes Copolymer aus Kohlenmonoxid und mindestens einer ethylenisch ungesättigten Verbindung und mindestens eine flammhemmende Menge eines Stoffes, der in der Lage ist, bei Zerfall eine flammhemmende, gasförmige Verbindung zu erzeugen, verbindet, dadurch gekennzeichnet, daß es sich bei dem Stoff um eine aus der Verbindungsgruppe der Oxalate und Hydroxide ausgewählte Metallverbindung handelt, die entweder eine basisch reagierende Verbindung ist oder bei Zerfall eine basisch reagierende Verbindung bildet und eine anfängliche Zersetzungstemperatur aufweist, die mindestens 25°C höher als die kristalline Schmelztemperatur des Polymers ist.

2. Verfahren nach Anspruch 1, wobei die Metallverbindungen auf einem Metall der Gruppe I, IIA, IIB des Periodensystems basieren.

3. Verfahren nach Anspruch 2, wobei es sich bei dem Metall um ein Metall der Gruppe IIA des Periodensystems, insbesondere um Magnesium, handelt.

4. Verfahren nach einem der Ansprüche 1-3, wobei die flammhemmenden Verbindungen 2-40 Massenprozent der Gesamtzusammensetzung ausmachen.

5. Verfahren nach Anspruch 4, wobei die flammhemmenden Verbindungen 5-25 Massenprozent der Gesamtzusammensetzung ausmachen.

6. Verfahren nach einem der Ansprüche 1-5, wobei die Partikel der flammhemmenden Verbindungen vor ihrer Dispergierung im Polymer vorbehandelt wurden.

7. Verfahren nach Anspruch 6, wobei die Vorbehandlung darin besteht, daß man die Partikel in einem wäßrigen Medium mit einer oder mehreren aus der Gruppe der anorganischen Säuren, Silane, Silikonöle, Fettsäuren und fettsauren Salzen ausgewählten Verbindungen in Kontakt bringt.

8. Verfahren nach Anspruch 7, wobei es sich bei dem fettsauren Salz um Natriumstearat oder Natriumoleat handelt.

9. Verfahren nach Anspruch 7, wobei es sich bei den Partikeln der flammhemmenden Verbindung um mit Borsäure behandelte flammhemmende Partikel handelt.

10. Verfahren nach Anspruch 7, wobei es sich bei den Partikeln der flammhemmenden Verbindung um mit Stearinsäure behandelte flammhemmende Partikel handelt.

## Revendications (Revendications pour l'(les) Etat(s) contractant(s) suivant(s): AT, BE, CH, DE, DK, FR, GB, GR, IT, LI, LU, NL, SE)

1. Compositions polymères retardatrices de flamme comprenant un copolymère linéaire alterné de monoxyde de carbone et d'au moins un composé éthyléniquement insaturé et au moins une quantité retardatrice de flamme d'une substance qui est capable de produire, lors de sa décomposition, un composé gazeux retardateur de flamme, caractérisées en ce que ladite substance est un composé de métal choisi dans le groupe de composés constitué par les oxalates et les hydroxydes, ce composé étant un composé à réaction basique ou formant un composé à réaction basique lors de sa décomposition, et ayant une température initiale de décomposition qui est à au moins 25°C au-dessus de la température de fusion cristalline du polymère.

2. Compositions retardatrices de flamme selon la revendication 1, dans lesquelles les composés de métaux sont à base d'un métal du groupe I, IIA ou IIB de la classification périodique des éléments.

3. Compositions retardatrices de flamme selon la revendication 2, dans lesquelles le métal est un métal du groupe IIA de la classification périodioque, spécialement le magnésium.

4. Compositions retardatrices de flamme selon l'une quelconque des revendications 1-3, dans lesquelles les composés retardateurs de flamme constituent de 2 à 40 % en poids de la composition totale.

5. Compositions retardatrices de flamme selon la revendication 4, dans lesquelles les composés retardateurs de flamme constituent de 5 à 25 % en poids de la composition totale.

6. Compositions retardatrices de flamme selon l'une quelconque des revendications 1-5, dans lesquelles les particules des composés retardateurs de flamme ont été prétraitées avant d'être dispersées dans le polymère.

7. Compositions retardatrices de flamme selon la revendication 6, dans lesquelles le prétraitement comprend la mise en contact des particules dans un milieu aqueux avec un ou plusieurs composés choisis dans le groupe constitué par les acides inorganiques, les silanes, les huiles de silicium, les acides gras et les sels d'acides gras.

8. Compositions retardatrices de flamme selon la revendication 7, dans lesquelles le sel d'acide gras est du stéarate de sodium ou de l'oléate de sodium.

9. Compositions retardatrices de flamme selon la revendication 7, dans lesquelles les particules du composé retardateur de flamme sont des particules retardatrices de flamme traitées par l'acide borique.

10. Compositions retardatrices de flamme selon la revendication 7, dans lesquelles les particules du composé retardateur de flamme sont des particules retardatrices de flamme traitées par l'acide stéarique.

## Revendications (Revendications pour l'(les) Etat(s) contractant(s) suivant(s): ES)

1. Procédé selon lequel on combine un copolymère linéaire alterné de monoxyde de carbone et d'au moins un composé éthyléniquement insaturé et au moins une quantité retardatrice de flamme d'une substance qui est capable de produire, lors de sa décomposition, un composé gazeux retardateur de flamme, caractérisé en ce que ladite substance est un composé de métal choisi dans le groupe de composés constitué par les oxalates et les hydroxydes, ce composé étant un composé à réaction basique ou qui forme un composé à réaction basique lors de sa décomposition, et qui a une température initiale de décomposition à au moins 25°C au-dessus de la température de fusion cristalline du polymère.

2. Procédé selon la revendication 1, dans lequel les composés de métaux sont à base d'un métal du group I, IIA ou IIB de la classification périodique des éléments.

3. Procédé selon la revendication 2, dans lequel le métal est un métal du groupe IIA de la classification périodique, spécialement le magnésium.

4. Procédé selon l'une quelconque des revendications 1-3, dans lequel les composés retardateurs de flamme constituent de 2 à 40 % en poids de la composition totale.

5. Procédé selon la revendication 4, dans lequel les composés retardateurs de flamme constituent de 5 à 25 % en poids de la composition totale.

6. Procédé selon l'une quelconque des revendications 1-5, dans lequel les particules des composés retardateurs de flamme ont été prétraitées avant d'être dispersées dans le polymère.

7. Procédé selon la revendication 6, dans lequel le prétraitement comprend la mise en contact des particules dans un milieu aqueux avec un ou plusieurs composés choisis dans le groupe constitué par les acides inorganiques, les silanes, les huiles de silicium, les acides gras et les sels d'acides gras.

8. Procédé selon la revendication 7, dans lequel le sel d'acide gras est du stéarate de sodium ou de l'oléate de sodium.

9. Procédé selon la revendication 7, dans lequel les particules du composé retardateur de flamme sont des particules retardatrices de flamme traitées par l'acide borique.

10. Procédé selon la revendication 7, dans lequel les particules du composé retardateur de flamme sont des particules retardatrices de flamme traitées par l'acide stéarique.
